# EUROPEAN PATENT APPLICATION

(11) **EP 4 663 153 A1**
(43) Date of publication of application: **17.12.2025**
(21) Application number: 25181723.5
(22) Date of filing: 10.06.2025
(51) Int. Cl.: A61C 1/05, A61C 1/12

(54) **DENTAL HANDPIECE**

(30) Priority: 10.06.2024 JP 2024093458
(71) Applicant: J. MORITA MANUFACTURING CORPORATION, Fushimi-ku, Kyoto-shi, Kyoto 6128533 (JP)
(72) Inventor: NORICHIKA, Takaaki, Kyoto-shi, Kyoto 612-8533 (JP); MIKAMI, Shinji, Kyoto-shi, Kyoto 612-8533 (JP)
(74) Representative: Müller Hoffmann & Partner

(57) **Abstract**

A dental handpiece includes: a body; and a head. The body includes a supply tube configured to supply air to the head. The head includes: a housing; a holding portion disposed in an inside of the housing and configured to hold and rotate a cutting tool; and a protruding portion protruding from a specific surface and having an opening through which the cutting tool is inserted into the holding portion, the specific surface corresponding to an inner-diameter-side bottom of the housing through which the cutting tool passes. The protruding portion has at least one discharge path provided at a specific position closer to a tip end of the cutting tool than the specific surface and configured to receive the air supplied from the supply tube at the specific position, guide the air to an outer circumferential side of the head and discharge the air to an outside.

## Description

### CROSS REFERENCE TO RELATED APPLICATIONS

This application is based on Japanese Patent Application No. 2024-093458 filed on June 10, 2024 with the Japan Patent Office .

### BACKGROUND

### Field

The present disclosure relates to a dental handpiece.

### Description of the Background Art

As a cutting instrument in the field of dentistry, there has been conventionally known a dental handpiece including a body configured to be grasped by a user such as an operator, and a head provided at a tip end of the body, wherein a cutting tool held by the head is rotated. Such a dental handpiece is configured to supply air from the body to the inside of the head and discharge the air from the inside of the head to the outside of the dental handpiece in order to rotate a rotor connected to the cutting tool or to prevent a temperature of the inside of the head from becoming high. For example, Japanese Patent No. 4122174 discloses a dental handpiece including a grasped portion configured to be grasped by a user, and a head portion connected to the grasped portion, wherein a cutting tool held by the head portion is rotated.

The dental handpiece disclosed in Japanese Patent No. 4122174 includes an inner housing that houses a member such as a rotor and an outer housing that surrounds the outer side of the inner housing, and is configured such that an annular portion formed as a part of the inner housing protrudes from the outer housing toward the tip end side of the cutting tool to thereby discharge air inside the inner housing from an air release port formed in an outer circumferential surface of the annular portion.

### SUMMARY

According to the dental handpiece disclosed in Japanese Patent No. 4122174, the air inside the inner housing can be discharged toward the outer circumference of the annular portion from the air release port formed in the annular portion of the inner housing protruding from the head. However, the air flowing out of the inside of the inner housing is temporarily received and scattered by an end portion of the annular portion branching to the air release port, and is discharged to the outside through not only the air release port but also a gap between the cutting tool inserted into an opening of the annular portion and the opening. The air leaking along the cutting tool as described above may cause a problem such as blowing away water released toward the tip end of the cutting tool for treatment.

The present disclosure has been made to solve the above-described problem, and an object of the present disclosure is to provide a dental handpiece that prevents air from the inside of a head from leaking along a cutting tool.

A dental handpiece according to the present disclosure includes: a body configured to be grasped by a user; and a head provided at a tip end of the body. The body includes a supply tube configured to supply air to the head. The head includes: a housing; a holding portion disposed in an inside of the housing and configured to hold and rotate a cutting tool; and a protruding portion protruding from a specific surface and having an opening through which the cutting tool is inserted into the holding portion, the specific surface corresponding to an inner-diameter-side bottom of the housing through which the cutting tool passes. The protruding portion has at least one discharge path provided at a specific position closer to a tip end of the cutting tool than the specific surface and configured to receive the air supplied from the supply tube at the specific position, guide the air to an outer circumferential side of the head and discharge the air to an outside.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 is a diagram showing an appearance of a dental handpiece.
Fig. 2 is a cross-sectional view of a head showing an internal structure of the head.
Fig. 3 is a diagram showing a structure of a protruding portion attached to a housing.
Fig. 4 is a diagram for illustrating flows of air and water that are supplied from a body to the head and discharged.
Fig. 5 is a diagram for illustrating flows of air and water that are supplied from the body to the head and discharged.
Fig. 6 is a diagram for illustrating flows of air and water that are supplied from the body to the head and discharged.
Fig. 7 is a diagram for illustrating flows of air and water that are supplied from the body to the head and discharged.
Fig. 8 is a diagram for illustrating flows of air and water that are supplied from the body to the head and discharged.
Fig. 9 is a diagram for illustrating flows of air and water that are supplied from the body to the head and discharged.
Fig. 10 is a diagram for illustrating flows of air and water that are supplied from the body to the head and discharged.
Fig. 11 is a diagram for illustrating flows of air and water that are supplied from the body to the head and discharged.
Fig. 12 is a diagram showing a configuration of a dental handpiece according to a comparative example.
Fig. 13 is a diagram showing how water is injected in the dental handpiece according to the comparative example.
Fig. 14 is a diagram showing how water is injected in the dental handpiece according to Fig. 1.

### DESCRIPTION

The present disclosure will be described in detail with reference to the drawings. In the drawings, the same or corresponding portions are denoted by the same reference characters, and description thereof will not be repeated.

### [Configuration of Dental Handpiece]

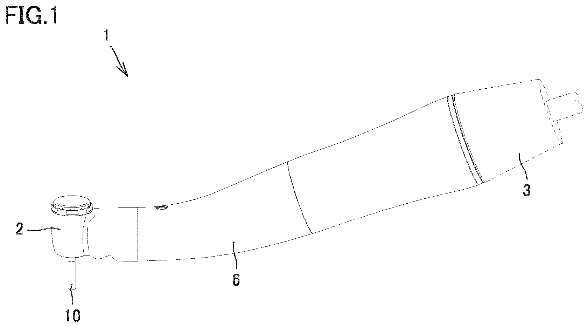

A main configuration of a dental handpiece 1 will be described with reference to Figs. 1 to 3. Fig. 1 is a diagram showing an appearance of dental handpiece 1. As shown in Fig. 1, dental handpiece 1 includes a body 6 configured to be grasped by a user such as an operator, and a head 2 provided at a tip end of body 6.

A driving unit 3 is detachably connected to one end of body 6. Head 2 is detachably connected to the other end of body 6. Body 6 includes a housing having a substantially cylindrical shape and gradually decreases in diameter from driving unit 3 toward head 2. Head 2 detachably holds a cutting tool 10 for cutting a tooth. Driving unit 3 supplies air for rotating cutting tool 10 held by head 2 (air for driving) or air for cooling the inside of head 2 to head 2 through body 6. Dental handpiece 1 is an air turbine handpiece configured to rotate cutting tool 10 at high speed by using the air supplied from driving unit 3.

Dental handpiece 1 is not limited to the air turbine handpiece and may be a motor handpiece configured to rotate a cutting tool at high speed by a motor. For example, dental handpiece 1 may be a contra-angle handpiece. When dental handpiece 1 is the motor handpiece, the air supplied from driving unit 3 is used to cool the inside of head 2 to prevent a temperature of the inside of head 2 from becoming high.

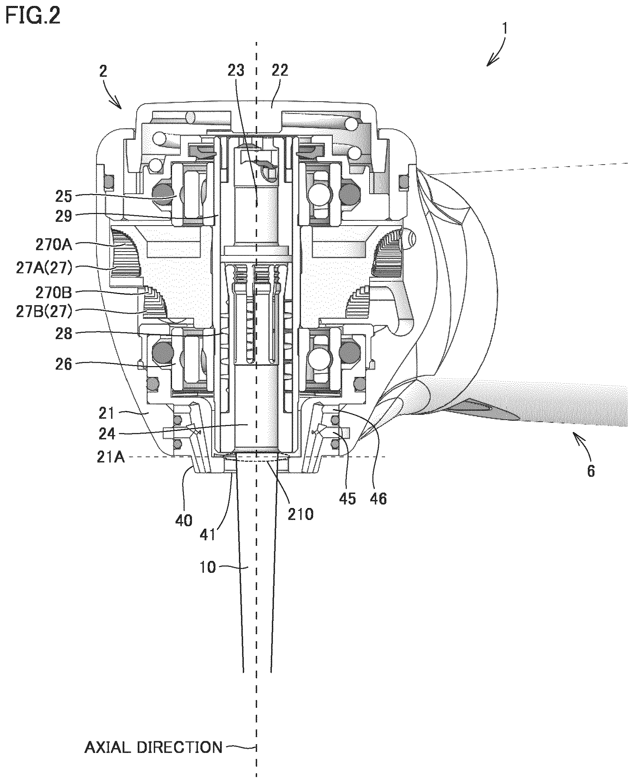

Fig. 2 is a cross-sectional view of head 2 showing an internal structure of head 2. As shown in Fig. 2, head 2 includes a housing 21, a push cap 22, a ring holder 23, a holding portion 24, a first bearing portion 25, a second bearing portion 26, a first rotor 27A, a second rotor 27B, an elastic body 28, a rotary cylinder 29, and a protruding portion 40 (or protruding element 40). Push cap 22, ring holder 23, holding portion 24, first bearing portion 25, second bearing portion 26, first rotor 27A, second rotor 27B, elastic body 28, rotary cylinder 29, and protruding portion 40 are provided inside housing 21. Hereinafter, a direction along a rotation axis of cutting tool 10 will also be referred to as "axial direction". In addition, in the axial direction, a direction in which a tip end of cutting tool 10 faces will be referred to as a downward direction or below, and a direction opposite to the direction in which the tip end of cutting tool 10 faces will be referred to as an upward direction or above.

Push cap 22 protrudes upward from housing 21 and can be pressed downward by the user.

Ring holder 23 is a cylindrical member disposed below push cap 22. Ring holder 23 moves in the axial direction with pressing of push cap 22 by the user.

Holding portion 24 is a cylindrical member disposed below ring holder 23 and is held in a circumferential direction by ring holder 23. The user can insert cutting tool 10 into a hollow portion of holding portion 24 from below to above. Holding portion 24 holds cutting tool 10 inserted into the hollow portion.

Elastic body 28 is a compression elastic body that can be deformed in a compression direction, and biases holding portion 24 such that holding portion 24 is engaged with cutting tool 10. When the user presses push cap 22, holding portion 24 moves downward together with ring holder 23 and elastic body 28 is compressed and deformed, whereby holding of cutting tool 10 by holding portion 24 is released.

Rotary cylinder 29 is a cylindrical member. Ring holder 23, holding portion 24 and elastic body 28 are housed in a hollow portion of rotary cylinder 29. Rotary cylinder 29 is connected to first rotor 27A and second rotor 27B. When first rotor 27A and second rotor 27B rotate along a circumferential direction of rotary cylinder 29, rotary cylinder 29 also rotates. When rotary cylinder 29 rotates, holding portion 24 housed in rotary cylinder 29 also rotates, and with the rotation of holding portion 24, cutting tool 10 held by holding portion 24 also rotates.

First bearing portion 25 and second bearing portion 26 are provided on the outer circumferential side of rotary cylinder 29 and rotatably support rotary cylinder 29. Second bearing portion 26 is disposed below first bearing portion 25.

First rotor 27A and second rotor 27B are provided on the outer circumferential side of rotary cylinder 29 and are configured to rotate inside housing 21. First rotor 27A and second rotor 27B are disposed between first bearing portion 25 and second bearing portion 26 in the axial direction. Second rotor 27B is disposed below first rotor 27A. In other words, second rotor 27B is disposed on the side closer to the tip end of cutting tool 10 than first rotor 27A in the axial direction.

First rotor 27A includes a plurality of blades 270A. When the air supplied from driving unit 3 through body 6 hits blades 270A, blades 270A are pushed from the windward side to the leeward side of the air and blades 270A (i.e., first rotor 27A) rotate. Second rotor 27B includes a plurality of blades 270B. When the air supplied from driving unit 3 through body 6 hits blades 270B, blades 270B are pushed from the windward side to the leeward side of the air and blades 270B (i.e., second rotor 27B) rotate. Hereinafter, first rotor 27A and second rotor 27B will also be collectively referred to as "rotor 27".

Protruding portion 40 is a ring-shaped member disposed below holding portion 24 and configured such that a part of a main body thereof is housed in housing 21 and a remaining portion of the main body thereof protrudes downward from housing 21. Specifically, an upper portion located at an upper section of the main body of protruding portion 40 is supported in contact with an inner surface of housing 21, and a remaining lower portion located at a lower section of the main body of protruding portion 40 protrudes downward from a specific surface 21A corresponding to an inner-diameter-side bottom of housing 21 through which cutting tool 10 passes. Specifically, a part of protruding portion 40 protrudes downward from an end surface of an opening 210 of housing 21 through which cutting tool 10 passes (specific surface 21A corresponding to the inner-diameter-side bottom). Furthermore, the upper portion of the main body housed in housing 21 is provided with ring-shaped flow paths 45 and 46 along the circumferential direction of rotary cylinder 29. Flow path 45 is disposed below flow path 46.

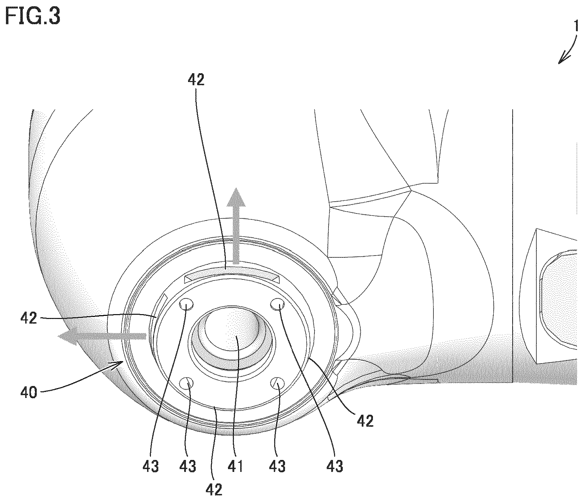

Fig. 3 is a diagram showing a structure of protruding portion 40 attached to housing 21. Fig. 3 shows a bottom surface of protruding portion 40. As shown in Fig. 3, protruding portion 40 is formed in a ring shape and a central portion of protruding portion 40 has an opening 41 into which cutting tool 10 is inserted. The user can attach cutting tool 10 to holding portion 24 by inserting cutting tool 10 into the hollow portion of holding portion 24 through opening 41 of protruding portion 40.

An outer circumferential surface of protruding portion 40 along the circumferential direction has a discharge port 42. For example, the outer circumferential surface of protruding portion 40 along the circumferential direction has four discharge ports 42 disposed at equal intervals in four directions. The number of discharge ports 42 formed in protruding portion 40 is not limited to four, and the other number of discharge ports 42 may be formed and at least one discharge port 42 may be formed. In addition, discharge ports 42 do not necessarily need to be disposed at equal intervals in the outer circumferential surface of protruding portion 40. For example, a plurality of discharge ports 42 may be formed on one side of the outer circumferential surface of protruding portion 40 and a plurality of discharge ports 42 may be formed on the other side located opposite to the one side. In addition, the shape of each of discharge ports 42 is not limited to a rectangular shape and may be another shape such as a round shape or an oval shape. Discharge ports 42 discharge the air having flowed through the inside of housing 21 to the outside of dental handpiece 1.

The bottom surface of protruding portion 40 has a water injection port 43. For example, the bottom surface of protruding portion 40 has four water injection ports 43 disposed at equal intervals along the circumferential direction of protruding portion 40. Water injection ports 43 are formed more inward (inner circumferential side) of protruding portion 40 than discharge ports 42. The number of water injection ports 43 formed in protruding portion 40 is not limited to four, and the other number of water injection ports 43 may be formed and at least one water injection port 43 may be formed. In addition, water injection ports 43 do not necessarily need to be disposed at equal intervals in the bottom surface of protruding portion 40. For example, a plurality of water injection ports 43 may be formed on one side of the bottom surface of protruding portion 40 and a plurality of water injection ports 43 may be formed on the other side located opposite to the one side. In addition, the shape of each of water injection ports 43 is not limited to a round shape and may be another shape such as an oval shape or a rectangular shape. Water injection ports 43 release the water having flowed through the inside of housing 21 to the outside of dental handpiece 1.

### [Flows of Air and Water in Dental Handpiece]

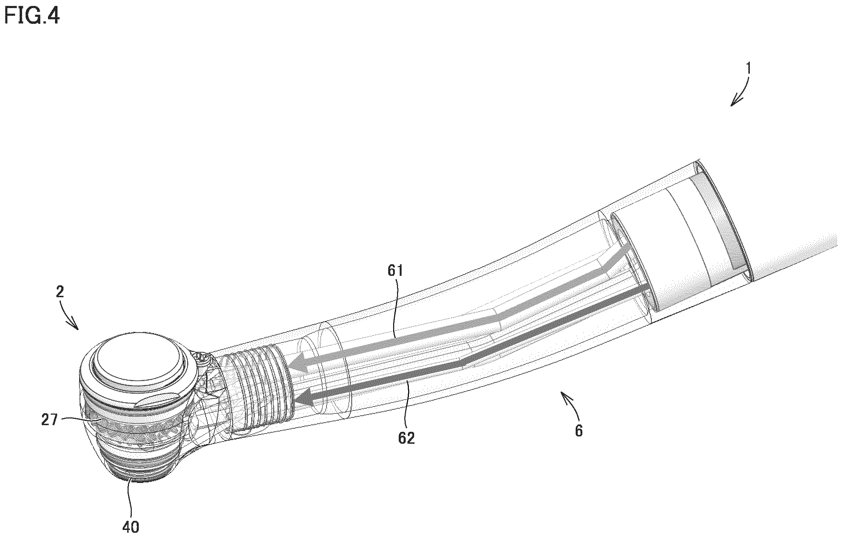

Flows of the air and the water in dental handpiece 1 will be described with reference to Figs. 4 to 11. Each of Figs. 4 to 11 is a diagram for illustrating the flows of the air and the water that are supplied from body 6 to head 2 and discharged.

As shown in Figs. 4 to 7, body 6 of dental handpiece 1 includes a supply tube 61 configured to supply the air from driving unit 3 to the inside of head 2. Body 6 of dental handpiece 1 includes supply tubes 62 and 63 configured to supply the water from a not-shown water injection portion of a dental chair to the inside of head 2.

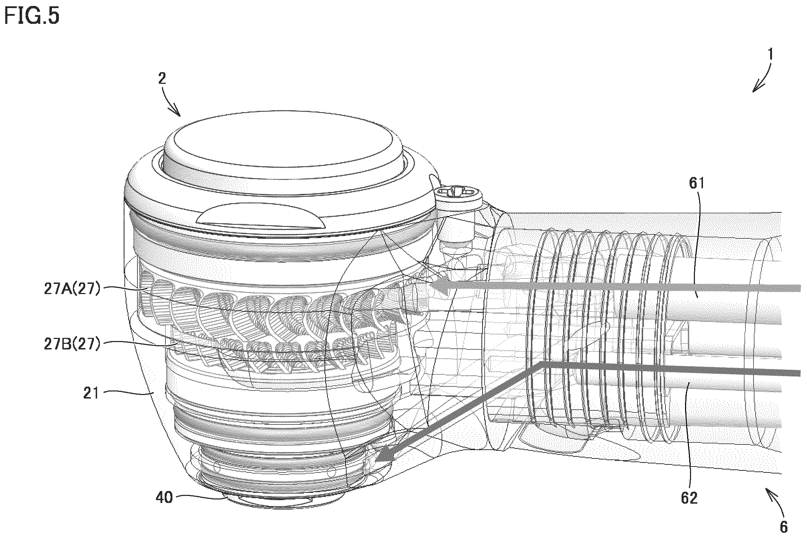

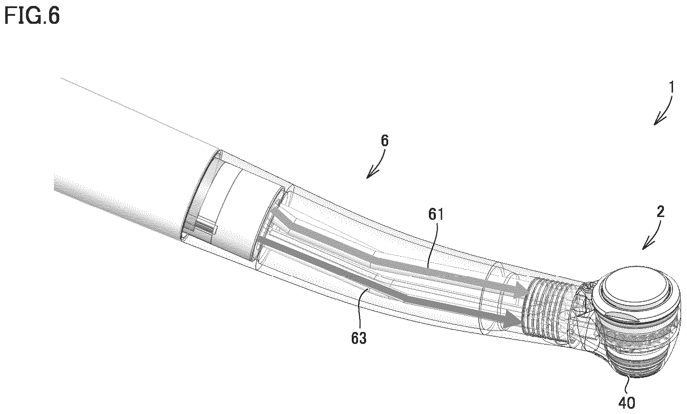

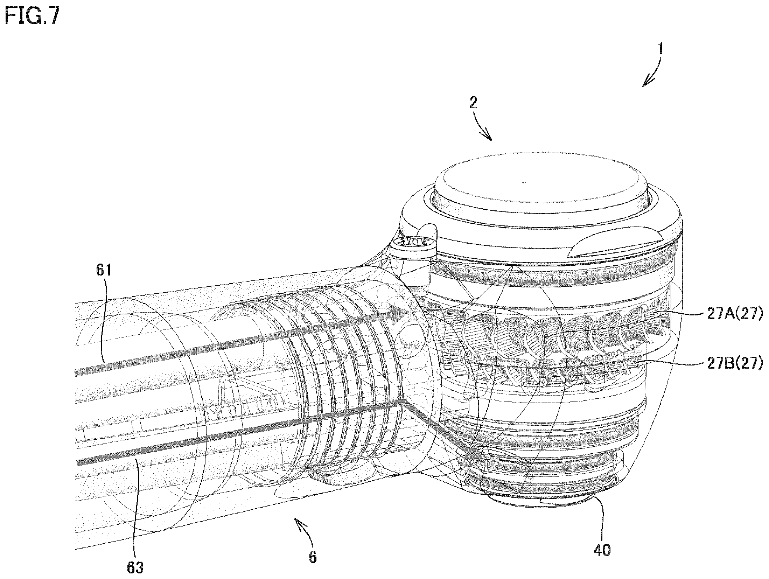

As shown in Figs. 4 to 7, the air having flowed through supply tube 61 flows into head 2 and is supplied to a rotor 27 provided in head 2. As shown in Figs. 4 and 5, the water having flowed through supply tube 62 is supplied to flow path 45 of protruding portion 40 provided in head 2. As shown in Figs. 6 and 7, the air having flowed through supply tube 63 is supplied to flow path 46 of protruding portion 40 provided in head 2.

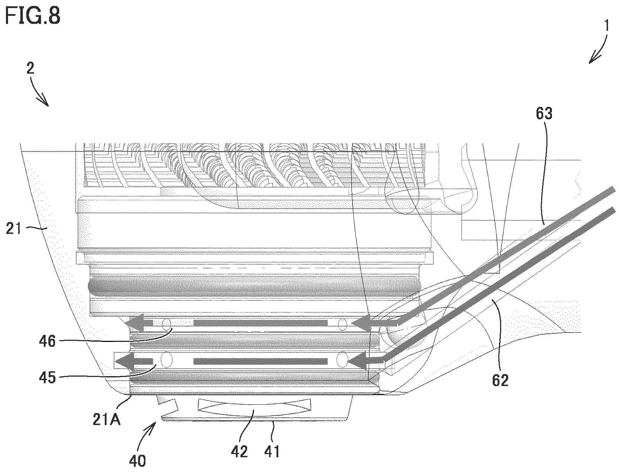

As shown in Fig. 8, the water supplied to flow path 45 through supply tube 62 flows through flow path 45 in a circumferential direction of the rotation axis of cutting tool 10. The air supplied to flow path 46 through supply tube 63 flows through flow path 46 in the circumferential direction of the rotation axis of cutting tool 10.

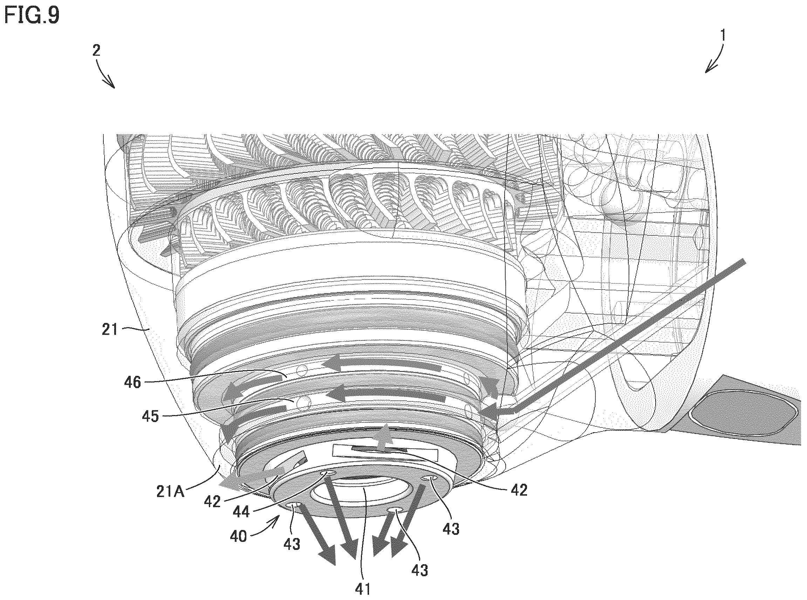

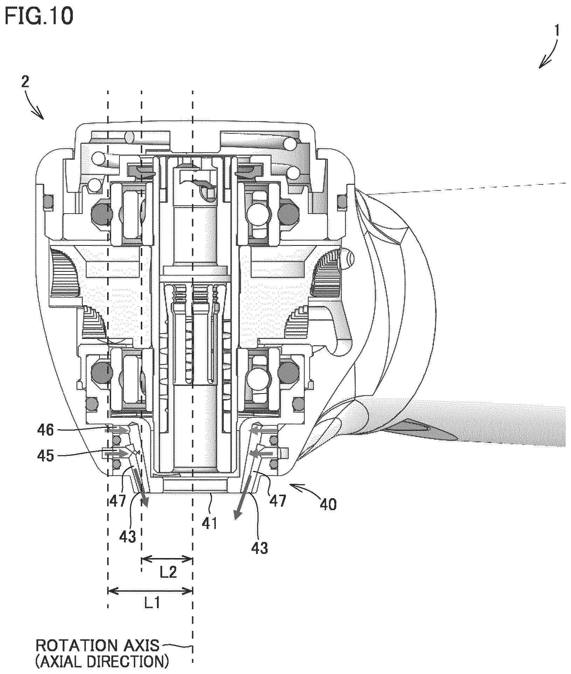

As shown in Figs. 9 and 10, the water flowing through flow path 45 is released to the outside from water injection ports 43 formed in the bottom surface of protruding portion 40. Specifically, as shown in Fig. 10, protruding portion 40 has a discharge path 47 configured to guide the water flowing through flow path 45 to water injection port 43. A length L1 of a radius of ring-shaped flow path 45 is longer than a length L2 between the rotation axis of cutting tool 10 and water injection port 43. That is, discharge path 47 is inclined from the outer side of head 2 to the inner side of head 2. As a result, the water flowing through flow path 45 flows through discharge path 47 and is released diagonally downward from water injection port 43 to the outside in a direction from the outer side of head 2 to the inner side of head 2 (direction approaching a central axis).

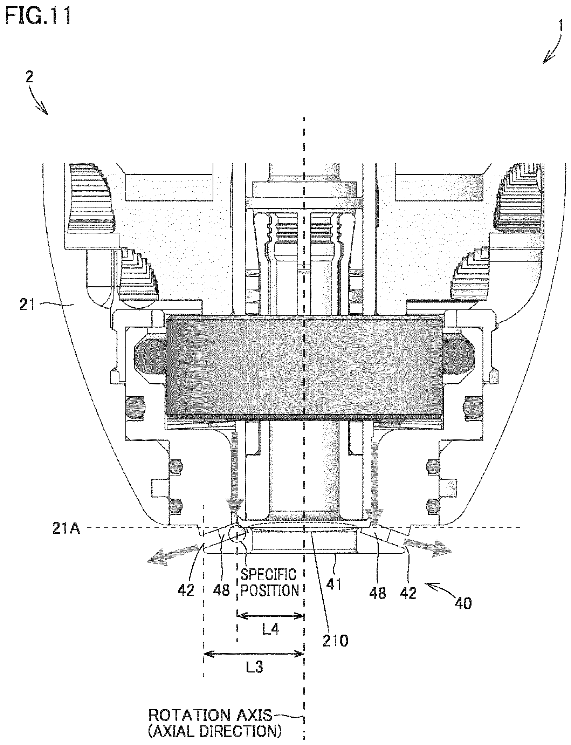

As shown in Figs. 9 and 11, the air flowing through flow path 46 and the air used to rotate rotor 27 are released to the outside from discharge ports 42 formed in the outer circumferential surface of protruding portion 40. Specifically, as shown in Fig. 11, protruding portion 40 has a discharge path 48 configured to guide the air from the inside of head 2 to discharge port 42. A length L3 between the rotation axis of cutting tool 10 and discharge port 42 is longer than a length L4 between the rotation axis of cutting tool 10 and an inlet portion of discharge path 48 into which the air from the inside of head 2 flows. That is, discharge path 48 is inclined from the inner side of head 2 to the outer side of head 2. As a result, the air from the inside of head 2 flows through discharge path 48 and is discharged diagonally downward from discharge port 42 to the outside in a direction from the inner side of head 2 to the outer side of head 2 (direction away from the central axis).

Furthermore, as described above, discharge path 48 of protruding portion 40 is provided at a specific position closer to the tip end of cutting tool 10 than specific surface 21A corresponding to the inner-diameter-side bottom of housing 21 through which cutting tool 10 passes (end surface of opening 210 of housing 21). That is, the inlet portion of discharge path 48 into which the air from the inside of head 2 flows is located below specific surface 21A. As a result, the inlet portion of discharge path 48 receives the air from the inside of head 2 at the specific position, guides the air to the outer circumferential side of head 2 and discharges the air to the outside.

### [Comparison with Dental Handpiece According to Comparative Example]

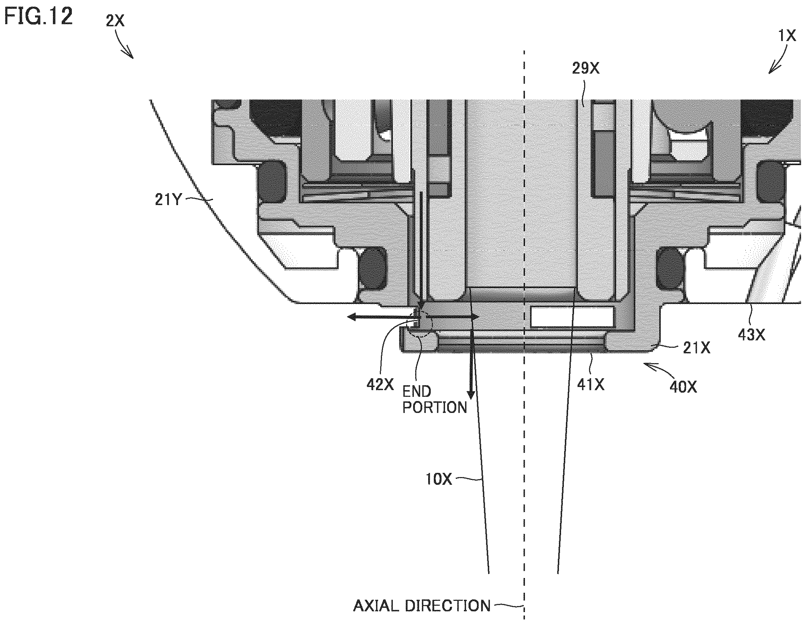

Dental handpiece 1 according to Figs. 1 to 3 and a dental handpiece 1X according to a comparative example will be compared with reference to Figs. 12 to 14. Fig. 12 is a diagram showing a configuration of dental handpiece 1X according to the comparative example.

As shown in Fig. 12, dental handpiece 1X includes a head 2X that houses a rotary cylinder 29X configured to hold and rotate a cutting tool 10X, and the like. Head 2X includes an inner housing 21X that houses rotary cylinder 29X and the like, and an outer housing 21Y that surrounds the outer side of inner housing 21X. A part of a lower section of inner housing 21X protrudes from outer housing 21Y toward the tip end side of cutting tool 10X as an annular portion 40X.

Annular portion 40X of inner housing 21X is formed in a ring shape and a central portion of annular portion 40X has an opening 41X into which cutting tool 10X is inserted. An outer circumferential surface of annular portion 40X along a circumferential direction has a discharge port 42X. Discharge port 42X discharges air having flowed through the inside of inner housing 21X to the outside of dental handpiece 1X.

As described above, in dental handpiece 1X, a side surface of inner housing 21X that houses rotary cylinder 29X and the like has discharge port 42X. Therefore, the air flowing out of the inside of inner housing 21X is temporarily received and scattered by an end portion of annular portion 40X branching to discharge port 42X, and is discharged to the outside through not only discharge port 42X but also a gap between cutting tool 10X inserted into opening 41X of annular portion 40X and opening 41X.

In addition, in dental handpiece 1X, outer housing 21Y has a water injection port 43X. That is, water injection port 43X is formed more outward (outer circumferential side) of dental handpiece 1X than discharge port 42X.

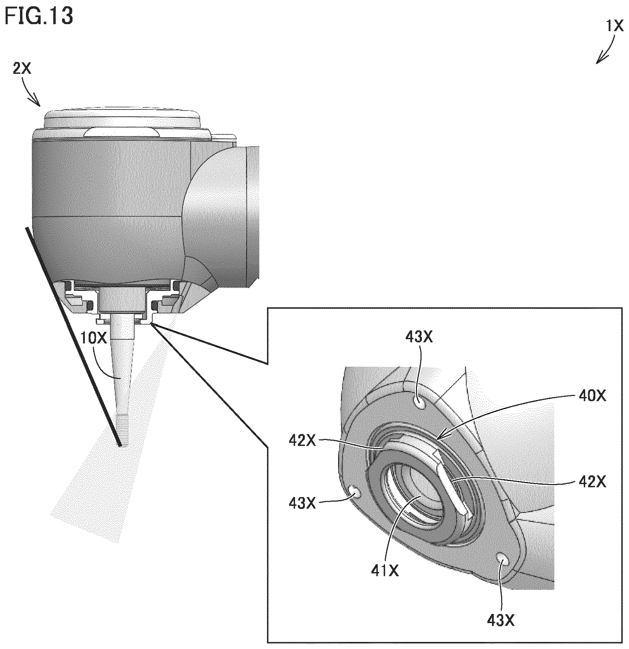

Fig. 13 is a diagram showing how the water is injected in dental handpiece 1X according to the comparative example. As shown in Fig. 13, water injection port 43X is formed more outward (outer circumferential side) of dental handpiece 1X than discharge port 42X. Furthermore, the air discharged from the inside of head 2X is temporarily received and scattered by the end portion of annular portion 40X and is discharged to the outside through not only discharge port 42X but also the gap between cutting tool 10X and opening 41X.

Thus, in dental handpiece 1X, the water released from water injection port 43X may be caught in and scattered by the air discharged from the gap between cutting tool 10X and opening 41X. In addition, in dental handpiece 1X, an angle of water injection from water injection port 43X to the tip end of cutting tool 10X is large. Since the spread of spray of the water released from water injection port 43X is wide and the angle of water injection is large in dental handpiece 1X as described above, the user's visibility of a tooth of a patient deteriorates during treatment by the user with the use of dental handpiece 1X. Furthermore, since water injection port 43X is disposed farther from cutting tool 10X than discharge port 42X, a tip end of head 2X of dental handpiece 1X increases in size, which also leads to deterioration of the user's visibility. Furthermore, when the air leaks from the gap between cutting tool 10X and opening 41X, subcutaneous emphysema may occur.

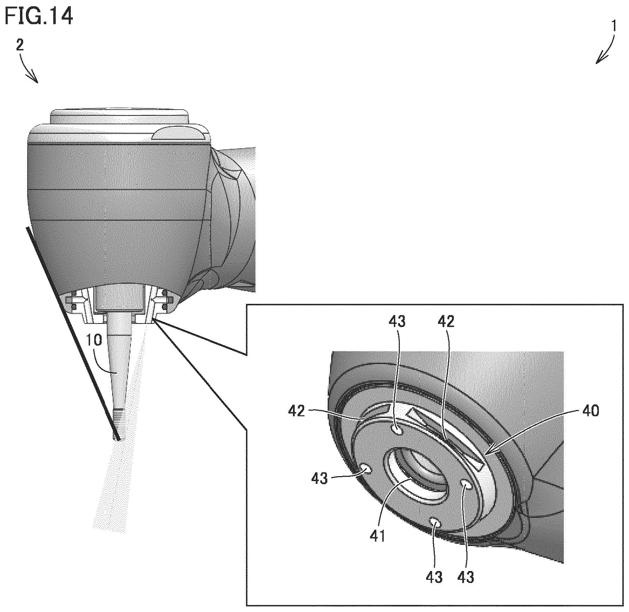

In contrast, Fig. 14 is a diagram showing how the water is injected in dental handpiece 1 according to Figs. 1 to 3. As shown in Fig. 14, in dental handpiece 1, water injection port 43 is formed more inward (inner circumferential side) of protruding portion 40 than discharge port 42. In addition, the water to be released from water injection port 43 is released diagonally downward toward the tip end of cutting tool 10. Furthermore, as shown in Fig. 11, the air to be discharged from discharge port 42 formed more outward (outer circumferential side) of protruding portion 40 than water injection port 43 is discharged diagonally downward to become away from the tip end of cutting tool 10.

Thus, dental handpiece 1 can prevent the water released from water injection port 43 from being caught in and scattered by the air discharged from discharge port 42. In addition, in dental handpiece 1, an angle of water injection from water injection port 43 to the tip end of cutting tool 10 can be made smaller. Since the spread of spray of the water released from water injection port 43 can be reduced and the angle of water injection can be made smaller in dental handpiece 1 as described above, the user's visibility of a tooth of a patient can be increased even during treatment by the user with the use of dental handpiece 1. Furthermore, since water injection port 43 is disposed closer to cutting tool 10 than discharge port 42, the tip end of head 2 of dental handpiece 1 can be reduced in size. Furthermore, since the water does not leak from the gap between cutting tool 10 and opening 41, there is no risk of subcutaneous emphysema.

As described above, dental handpiece 1 includes, as a member separate from housing 21, protruding portion 40 protruding from the specific surface and having opening 41 through which cutting tool 10 is inserted into holding portion 24, the specific surface corresponding to the inner-diameter-side bottom of housing 21 through which cutting tool 10 passes. In dental handpiece 1, the air from the inside of head 2 can be received at the specific position closer to the tip end of cutting tool 10 than the specific surface in protruding portion 40, and the air can be guided to the outer circumferential side of head 2 and discharged to the outside by discharge path 48. As a result, dental handpiece 1 can prevent the occurrence of such inconvenience that the air from the inside of head 2X is received and scattered by the end portion of inner housing 21X and discharged to the outside through the gap between cutting tool 10X and inner housing 21X as in dental handpiece 1X according to the comparative example. As described above, dental handpiece 1 can prevent the air from the inside of head 2 from leaking along cutting tool 10.

It should be understood that the above description is illustrative and non-restrictive in every respect. The present disclosure is defined by the claimed subject-matter, rather than the description above, and is intended to include any modifications within the claimed subject-matter. The configuration illustrated in the embodiments and the configuration illustrated in the modifications can be combined as appropriate.

## Claims

1. A dental handpiece comprising:
a body configured to be grasped by a user; and
a head provided at a tip end of the body, wherein
the body includes a supply tube configured to supply air to the head,
the head includes:
a housing;
a holding portion disposed in an inside of the housing and configured to hold and rotate a cutting tool; and
a protruding portion protruding from a specific surface and having an opening through which the cutting tool is inserted into the holding portion, the specific surface corresponding to an inner-diameter-side bottom of the housing through which the cutting tool passes, and
the protruding portion has at least one discharge path provided at a specific position closer to a tip end of the cutting tool than the specific surface, the at least one discharge path being configured to receive the air supplied from the supply tube at the specific position, guide the air to an outer circumferential side of the head and discharge the air to an outside.

2. The dental handpiece according to claim 1, wherein
the protruding portion is formed in a ring shape, and
an outer circumferential surface of the protruding portion along a circumferential direction has at least one discharge port through which the air guided by the at least one discharge path is discharged to the outside.

3. The dental handpiece according to claim 2, wherein
the at least one discharge port includes a plurality of discharge ports disposed at equal intervals along the circumferential direction.

4. The dental handpiece according to claim 2 or 3, wherein
a bottom surface of the protruding portion has at least one water injection port through which water can be released from the inside to the outside.

5. The dental handpiece according to claim 4, wherein
the at least one water injection port includes a plurality of water injection ports disposed at equal intervals along the circumferential direction.
